Europäisches Patentamt

European Patent Office

Office européen des brevets

(11) Veröffentlichungsnummer: **0 402 767**

**A2**

## (12) EUROPÄISCHE PATENTANMELDUNG

(21) Anmeldenummer: **90110781.3**

(51) Int. Cl.5: **G02F 1/39**

(22) Anmeldetag: **07.06.90**

(30) Priorität: **10.06.89 DE 3919006**

(43) Veröffentlichungstag der Anmeldung:
**19.12.90 Patentblatt 90/51**

(84) Benannte Vertragsstaaten:
**AT BE CH DE DK ES FR GB IT LI NL SE**

(71) Anmelder: **Standard Elektrik Lorenz
Aktiengesellschaft
Lorenzstrasse 10
D-7000 Stuttgart 40(DE)**

(72) Erfinder: **Kersten, Peter, Dr.
Neuköllnerstrasse 8
D-7250 Leonberg(DE)**

(74) Vertreter: **Brose, Gerhard et al
Standard Elektrik Lorenz AG Patent- und
Lizenzwesen Postfach 30 09 29
D-7000 Stuttgart 30(DE)**

(54) **Vorrichtung und Verfahren zur Verstärkung optischer Signale.**

(57) Bei der Übertragung optischer Signale über große Strecken mittels Lichtleitfasern werden Repeater benutzt, die das eintreffende optische Signal in ein elektrisches Signal umwandeln, das elektrische Signal elektronisch verstärken, und das verstärkte elektrische Signal wieder in ein optisches Signal zurückverwandeln. Solche Repeater erfordern einen großen schaltungsaufwand. Ein direkter optischer Verstärker, bestehend aus einem Zwei-Moden-Bereich 10, zwei Eingängen 11 und 12 sowie Ausgängen 13 und 14 reduziert den Schaltungsaufwand erheblich. Wesentlich ist dabei, daß der Zwei-Moden-Bereich 10 mit einem Material gefüllt ist, was nichtlineares optisches Verhalten zeigt. Wird über einen der Eingänge das zu verstärkende Signal, über den anderen Licht hoher Energie kontinuierlich zugeführt, so steht am Ausgang des Verstärkers das verstärkte Signal zur Verfügung.

FIG.1

EP 0 402 767 A2

## Vorrichtung und Verfahren zur Verstärkung optischer Signale

Die Erfindung betrifft eine Vorrichtung und ein Verfahren zur Verstärkung optischer Signale, insbesondere zur direkten optischen Verstärkung optischer Signale.

Bei der Übertragung von Daten über Lichtleitfasern sinkt infolge der von den Lichtleitfasern hervorgerufenen Dämpfung der Signalpegel. Bei der Übertragung über weite Strecken sind daher Verstärker (Repeater) vorzusehen, die den Pegel der eintreffenden Impulse anheben. Die Repeater arbeiten wie folgt: Die im Repeater ankommenden optischen Signale werden mit Hilfe einer Photodiode oder eines anderen photoempfindlichen Elementes in elektrische Impulse umgewandelt. Diese elektrischen Impulse werden darauf elektronisch verstärkt. Die elektronisch verstärkten Impulse dienen zur Ansteuerung einer Laserdiode, die die elektrischen Impulse in optische Impulse zurückverwandelt. Der Ausgang des Repeaters wird dann mit einem Lichtwellenleiter verbunden, der die optischen Signale weitertransportiert. Bei den Repeatern handelt es sich um Verstärker in integrierter Bauweise auf Halbleiterbasis, insbesondere mit III-V-Halbleitern. Die bekannte Lösung hat den Nachteil, daß die Umwandlung "Lichtimpulse - elektrische Impulse - Lichtimpulse" einen größen Schaltungsaufwand erfordert. Darüber hinaus ist elektronische Verstärkung im Gigabitbereich nicht einfach zu handhaben. Aufgabe der Erfindung ist es daher, ein einfacheres Verfahren und eine einfachere Vorrichtung zu finden, bei der die doppelte Umwandlung der Signale vermieden wird und mit der sich hohe Datenraten sicher handhaben lassen.

Gelöst wird diese Aufgabe durch eine Vorrichtung und ein Verfahren mit der Merkmalskombination des ersten Vorrichtungs- und des ersten Verfahrensanspruches. In den abhängigen Ansprüchen sind vorteilhafte Weiterbildungen und Ausgestaltungen der Erfindung enthalten.

Das erfindungsgemäße Verfahren hat den Vorteil, daß sich durch die direkte optische Verstärkung der Schaltungsaufwand eines Repeaters reduziert. Ein weiterer Vorteil liegt darin, daß der Verstärker mit Hilfe elektrischer Felder abgeglichen werden kann.

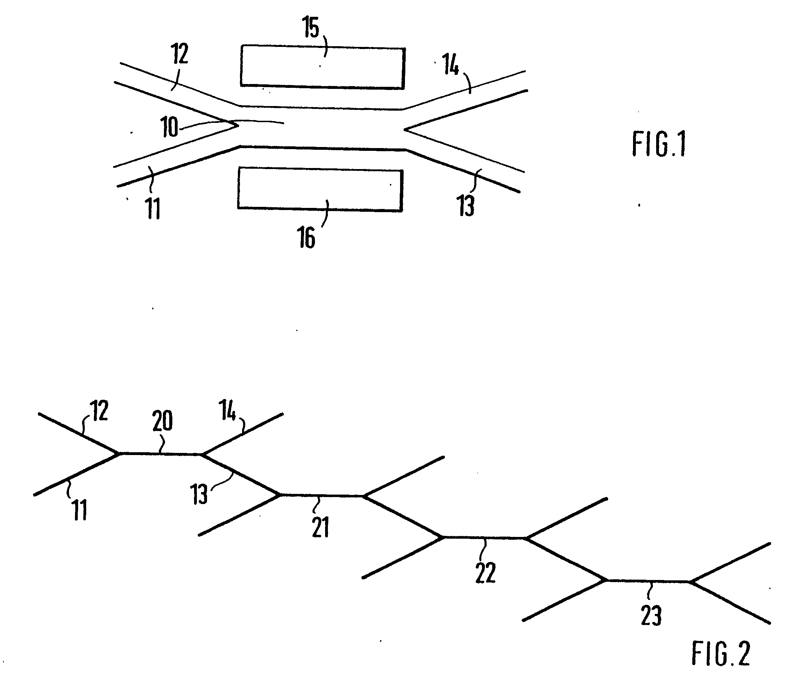

Ein Ausführungsbeispiel der Erfindung wird im folgenden beschrieben und anhand der Figuren 1 und 2 näher erläutert. Es zeigen:

Fig. 1 einen optischen Verstärker,

Fig. 2 ein aus mehreren Verstärkern aufgebautes array.

In Fig. 1 ist mit 10 ein dielektrisches Medium bezeichnet, in dem sich zwei optische Moden ausbreiten können. Mit 11 und 12 Sind Eingänge, mit 13 und 14 Ausgänge bezeichnet. Das dielektrische Medium 10 ist von zwei Elektroden 15 und 16 umgeben. Wesentliche Voraussetzung für die Funktionsfähigkeit des optischen Verstärkers ist, daß das dielektrische Medium 10 nichtlineares optisches Verhalten zeigt. Gelangt jetzt über einen der beiden Eingänge 11 oder 12 ein optsiches Signal in das dielektrische Medium 10 (im weiteren auch als Zwei-Moden-Bereich bezeichnet) und wird über den Eingang 12 Licht hoher Energie entweder kontinuierlich oder im Takt des am Eingang 11 liegenden Signales in den Zwei-Moden-Bereich eingekoppelt, so bewirkt das nichtlineare optische Verhalten, daß ein Teil der Lichtenergie des über den Eingang 12 in den Bereich 10 gelangenden Lichtes auf das über den Eingang 11 in den Bereich 10 gelangende Signal übergekoppelt wird. An einem der Ausgänge 13 oder 14 steht dann ein verstärktes optisches Signal zur Verfügung. Es sei an dieser Stelle darauf hingewiesen, daß ein einziger Ausgang für die Funktion des Verstärkers ausreichend ist.

Zeigt das im Zwei-Moden-Bereich verwendete Material zusätzlich zum nichtlinearen Verhalten auch noch den elektrooptischen Effekt, so besteht die Möglichkeit, mit Hilfe der beiden Elektroden 15 und 16 die Phasengeschwindigkeiten der beiden Moden zu steuern. Dies kann beispielsweise dazu verwendet werden, den optischen Verstärker abzugleichen oder Schwankungen in der Intensität der kontinuierlichen oder Pulslichtquelle auszugleichen.

Fig 2 zeigt schematisch eine aus mehreren optischen Verstärkern nach Fig. 1 aufgebautes array von optischen Verstärkern Die einzelnen Verstärkerelemente sind mit 20, 21, 22 und 23 bezeichnet. Eine gemeinsame Versorgung mehrerer optischer Verstärker nach Fig. 2 ist jedoch nur möglich, wenn vom System her nur an einem Eingang ein Signal auftreten kann, oder wenn die an den einzelnen Eingängen auftretenden Signalimpulse zeitlich so gegeneinander verschoben sind, daß sie sich gegenseitig nicht überlappen.

## Ansprüche

1. Vorrichtung zur Verstärkung optischer Signale, bestehend aus einem dielektrischen Medium (10), dem über wenigStenS zwei Eingänge (11, 12) Licht zugeführt wird und in dem sich zwei Moden ausbreiten können, mit wenigstens einem Ausgang (13, 14), **dadurch gekennzeichnet,** daß das dielektrische Medium (10) nichtlineares optisches Verhalten zeigt.

2. Vorrichtung nach Anspruch 1, dadurch gekennzeichnet, daß über einen der Eingänge (11) ein optisches Signal in das dielektrische Medium (10) gelangt.

3. Vorrichtung nach Anspruch 1, dadurch gekennzeichnet, daß über einen der Eingänge (12) Licht hoher Energie kontinuierlich oder gepulst in das dielektrische Medium (10) gelangt.

4. Vorrichtung nach den Ansprüchen 2 und 3, dadurch gekennzeichnet, daß am Ausgang (13, 14) das verstärkte optische Signal zur Verfügung steht,

5. Vorrichtung nach Anspruch 1, dadurch gekennzeichnet, daß das dielektrische Medium von zwei Steuerelektroden (15, 16) umgeben ist.

6. Verfahren zur direkten optischen Verstärkung optischer Signale, dadurch gekennzeichnet, daß in einem dielektrischen Material mit nichtlinearem optischem Verhalten Licht hoher Energie mit optischen Signalen moduliert wird.

7. Verfahren nach Anspruch 6, dadurch gekennzeichnet, daß in dem dielektrischen Material zwei Moden ausbreitungsfähig sind.

8. Verfahren nach Anspruch 7, dadurch gekennzeichnet, daß die Verstärkung durch äußere elektrische Felder beeinflußbar ist.

FIG.1

FIG.2

EP 0 402 767 A2